(19) **Europäisches Patentamt / European Patent Office / Office européen des brevets**

(11) **EP 4 481 377 B1**

(12) **FASCICULE DE BREVET EUROPEEN**

(45) Date de publication et mention
de la délivrance du brevet:
**25.02.2026 Bulletin 2026/09**

(51) Classification Internationale des Brevets (IPC):
**G01N 29/02** *(2006.01)*    B01L 3/00 *(2006.01)*
G01N 9/00 *(2006.01)*    G01N 29/036 *(2006.01)*

(21) Numéro de dépôt: **24178901.5**

(22) Date de dépôt: **29.05.2024**

(52) Classification Coopérative des Brevets (CPC):
**G01N 29/022; G01N 5/00; G01N 9/002;**
**G01N 29/036; G01N 29/222;** G01N 2009/006;
G01N 2291/0256

(54) **SYSTÈME ET PROCÉDÉ DE MESURE D'AU MOINS UNE PROPRIÉTÉ D'UNE PARTICULE À L'AIDE D'UN RÉSONATEUR MÉCANIQUE ET D'UN CAPTEUR GRAVIMÉTRIQUE COUPLÉS MÉCANIQUEMENT**

SYSTEM UND VERFAHREN ZUR MESSUNG MINDESTENS EINER EIGENSCHAFT EINES PARTIKELS MIT EINEM MECHANISCHEN RESONATOR UND EINEM MECHANISCH GEKOPPELTEN GRAVIMETRISCHEN SENSOR

SYSTEM AND METHOD FOR MEASURING AT LEAST ONE PROPERTY OF A PARTICLE USING A MECHANICALLY COUPLED MECHANICAL RESONATOR AND GRAVIMETRIC SENSOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **19.06.2023 FR 2306255**

(43) Date de publication de la demande:
**25.12.2024 Bulletin 2024/52**

(73) Titulaire: **Commissariat à l'Energie Atomique et aux Energies Alternatives**
**75015 Paris (FR)**

(72) Inventeur: **AGACHE, Vincent**
**38054 Grenoble cedex 09 (FR)**

(74) Mandataire: **INNOV-GROUP**
**209 Avenue Berthelot**
**69007 Lyon (FR)**

(56) Documents cités:
**US-A1- 2021 046 477    US-B2- 8 899 102**

• **ANNALISA DE PASTINA ET AL: "Suspended micro/nano channel resonators: a review", JOURNAL OF MICROMECHANICS AND MICROENGINEERING, INSTITUTE OF PHYSICS PUBLISHING, BRISTOL, GB, vol. 30, no. 4, 18 February 2020 (2020-02-18), pages 43001, XP020352112, ISSN: 0960-1317, [retrieved on 20200218], DOI: 10.1088/1361-6439/AB6DF1**

**Description**

**Domaine technique de l'invention**

La présente invention se rapporte à un système et à un procédé de mesure d'au moins une propriété d'une particule à l'aide d'un résonateur mécanique à canal fluidique intégré et d'un capteur gravimétrique couplés mécaniquement.

**Etat de la technique**

Pour détecter la présence de biomarqueurs d'intérêt tels que des protéines, exosomes, ARN circulant, ADN circulant, virus, ou des espèces cibles de plus grandes dimensions telles que des bactéries et cellules, il est connu d'utiliser des biocapteurs.

Dans les biocapteurs, il existe notamment la catégorie des capteurs gravimétriques. Ceux-ci sont basés sur l'utilisation d'un oscillateur ou résonateur mécanique, doté d'une partie suspendue mise en vibration à sa fréquence de résonance. Toute cible qui se greffe à la surface de la partie suspendue du résonateur, entraîne l'augmentation de la masse de celle-ci, ce qui diminue sa fréquence de résonance, d'un décalage proportionnel à la masse de la cible capturée.

En mesurant les fluctuations de fréquence de résonance en continu, il est alors possible de remonter à la masse adsorbée sur le résonateur en temps réel et par exemple de suivre ainsi des cinétiques d'adsorption avec des cibles.

Une solution proposée dans l'état de la technique consiste à intégrer et délimiter un canal fluidique à l'intérieur même de la partie suspendue du résonateur, tandis que celui-ci oscille dans une cavité exempte de fluide. L'avantage réside alors en un facteur de qualité très peu altéré, même en présence de fluide circulant dans l'oscillateur, et ainsi une limite de détection optimisée. Ce type de résonateur est couramment appelé SMR ("Suspended Microchannel Resonator") ou encore SNR ("Suspended Nanochannel Resonator"), selon les dimensions de son canal fluidique. On peut noter qu'un résonateur muni d'un canal fluidique dont la largeur ou l'épaisseur est inférieure à 1 $\mu$m sera référencée comme un SNR, autrement il s'agira d'un SMR.

Par un gradient de pression imposé entre une entrée fluidique et une sortie fluidique du circuit, il est possible de contrôler l'écoulement du fluide (son débit et sens d'écoulement), et donc le passage de particules en suspension dans le SMR (ou SNR).

Ce type de capteur a été utilisé pour diverses applications, incluant la pesée individuelle de particules biologiques telles que des cellules, bactéries, des nanoparticules ou encore la détection de protéines spécifiques par la fonctionnalisation préalable des parois internes du SMR. Ce principe de fonctionnement est désormais bien connu. La demande de brevet US2021/046477A1 et les brevets US8899102B1**,** US8631685B2 **et** US8312763B2 décrivent ce type de capteur.

Les documents US2021/046477A1 et US8899102B2 documents décrivent pour leur part des solutions de type SMR classique.

Bien que la solution qui utilise un résonateur de type SNR présente une limite de détection améliorée par rapport à celle utilisant un résonateur de type SMR, celle-ci présente certaines limites :

- Les dimensions de la partie suspendue du SNR entraînent des limitations sur la taille de son canal fluidique et donc sur la taille des particules qu'il est possible d'y injecter et analyser ;
- Ces contraintes dimensionnelles peuvent obliger une préparation préalable de l'échantillon à analyser, pour que les particules puissent circuler librement dans le canal fluidique du résonateur SNR sans risque que celui-ci se bouche consécutivement à la présence de particules plus grosses que sa section fluidique; autrement dit, le résonateur n'est pas forcément adapté pour l'analyse d'échantillons complexes (comme le sang par exemple, car il contient aussi bien des cellules, que des protéines, couvrant une dynamique en taille allant du nanomètre à plusieurs micromètres pour les cellules de 10 à 15 $\mu$m de diamètre typiquement) ;

Il existe donc un besoin de disposer d'une solution permettant à la fois de libérer les contraintes dimensionnelles du circuit fluidique d'un résonateur de type SNR et d'atteindre une limite de détection au moins équivalente à celle d'un résonateur de type SNR.

**Exposé de l'invention**

Ce but est atteint par un système de mesure d'au moins une propriété d'une particule, comprenant :

- Un résonateur mécanique comportant au moins une première partie fixe et une première partie suspendue apte à vibrer par rapport à la première partie fixe, et un circuit fluidique intégrée dans sa partie suspendue, dans lequel est amené à circuler un fluide contenant ladite particule,
- Des moyens d'excitation configurés pour faire vibrer la première partie suspendue à une fréquence d'excitation,
- Un premier capteur gravimétrique comprenant au moins une deuxième partie fixe et une deuxième partie suspendue apte à vibrer par rapport à la deuxième partie fixe à une fréquence de vibration,
- La première partie suspendue du résonateur mécanique et la deuxième partie suspendue du premier capteur gravimétrique étant couplées mécaniquement entre elles via un élément de liaison mécanique,
- Des moyens de mesure des variations de la fréquence de vibration de la deuxième partie suspendue du premier capteur gravimétrique.

De manière avantageuse, la fréquence d'excitation correspond à la fréquence de résonance du résonateur ou celle d'un mode propre supérieur de cette fréquence de résonance.

Selon une réalisation avantageuse, l'élément de liaison mécanique comporte une première extrémité solidaire de la première partie suspendue sur un premier point correspondant à un anti-nœud de vibration de la première partie suspendue, lorsque celle-ci est excitée à sa fréquence de résonance ou à celle d'un mode propre supérieur. Selon une réalisation avantageuse, l'élément de liaison mécanique comporte une deuxième extrémité solidaire de la deuxième partie suspendue sur un deuxième point correspondant à un anti-nœud de vibration de la deuxième partie suspendue, lorsque celle-ci est excitée à la fréquence de vibration.

Selon une réalisation particulière, la première partie suspendue est choisie parmi une poutre encastrée sur une seule partie fixe, une poutre encastrée entre deux parties fixes, et une plaque maintenue entre plusieurs parties fixes.

Selon une réalisation particulière, la deuxième partie suspendue est choisie parmi une poutre encastrée sur une seule partie fixe, une poutre encastrée entre deux parties fixes, et une plaque maintenue entre plusieurs parties fixes.

Selon une particularité, les moyens d'excitation sont configurés pour faire vibrer la deuxième partie suspendue à une fréquence de vibration proche de la fréquence de résonance de la première partie suspendue ou à celle d'un mode propre supérieur, à plus ou moins 30% de ladite fréquence de résonance ou de celle du mode propre supérieur.

Selon une particularité, les moyens d'excitation comportent au moins un élément piézocéramique.

Selon une autre particularité, les moyens de mesure comportent une ou plusieurs jauges piézorésistives.

Selon une autre particularité, le circuit fluidique intégré à la première partie suspendue du résonateur mécanique comporte un canal fluidique principal et un piège hydrodynamique positionné dans son canal et destiné à venir piéger ladite particule. Selon une autre réalisation particulière, le système comporte :

- Un deuxième capteur gravimétrique, comportant au moins une troisième partie fixe et une troisième partie suspendue apte à vibrer par rapport à la troisième partie fixe à une deuxième fréquence de vibration,
- La première partie suspendue du résonateur mécanique et la troisième partie suspendue du deuxième capteur gravimétrique étant couplées mécaniquement entre elles via un deuxième élément de liaison mécanique,
- Des deuxièmes moyens de mesure des variations de la deuxième fréquence de vibration de la troisième partie suspendue du deuxième capteur gravimétrique.

Selon une particularité, la troisième partie suspendue est choisie parmi une poutre encastrée sur une seule partie fixe, une poutre encastrée entre deux parties fixes, et une plaque maintenue entre plusieurs parties fixes.

L'invention concerne également un procédé de mesure d'au moins une propriété d'une particule, mis en œuvre à l'aide d'un système de mesure tel que défini ci-dessus, le procédé comportant les étapes suivantes :

- Injection d'un fluide contenant ladite particule dans le circuit fluidique du résonateur mécanique,
- Excitation de la première partie suspendue du résonateur mécanique à sa fréquence de résonance,
- Excitation de la deuxième partie suspendue du premier capteur gravimétrique à la fréquence de vibration,
- Mesure des variations de la fréquence de vibration de la deuxième partie suspendue du premier capteur gravimétrique.

Selon une particularité, le procédé comporte une étape de calibrage du système par injection dans le circuit fluidique d'un fluide contenant une ou plusieurs particules calibrées.

Le principe de l'invention repose ainsi de manière globale sur le couplage mécanique d'une structure oscillante embarquant un canal fluidique (c'est-à-dire un SMR), avec un oscillateur solide (sans canal fluidique) qui est beaucoup plus petit (et qu'on appellera NEMS pour Nano Electro-Mechanical System ou autrement MEMS pour Micro Electro-mechanical System selon les dimensions), et qui sert pour réaliser la mesure de fluctuations de fréquences consécutives au passage de particules ou cibles en circulation dans le canal fluidique.

Dans le cadre de l'invention, on peut ainsi exploiter les petites dimensions du capteur gravimétrique (c'est-à-dire le NEMS ou MEMS), en minimisant sa masse effective (proportionnelle à son volume, à la densité du matériau qui le constitue et qui est également fonction du mode de résonance). On peut obtenir une limite de détection optimisée par rapport à celle du résonateur mécanique incluant le canal fluidique (c'est-à-dire le SMR).

Dans le même temps, les dimensions micrométriques du canal fluidique intégré à un résonateur de type SMR permettent d'y faire circuler des cibles ou particules de taille micrométrique (typiquement de 10 à 15$\mu$m de diamètre pour des cellules, voire plus), ainsi que des fluides plus complexes que dans le cas de résonateurs de type SNR standards, ceux-ci étant contraints en dimensions par la largeur sub-micrométrique (c'est-à-dire inférieure à 1$\mu$m) de leur canal fluidique.

De manière générale, le couplage mécanique du résonateur SMR avec le capteur NEMS sera réalisé de manière à ce que l'entraînement en oscillation de la partie suspendue du capteur NEMS par la partie suspendue du résonateur SMR soit maximal, et à minimiser l'amortissement des vibrations de l'un et l'autre, pour ainsi optimiser le facteur de qualité. L'enjeu est que le couplage mécanique amortisse le moins possible les vibrations du capteur NEMS, et réciproquement celles du résonateur SMR, et donc que l'on obtienne une transduction la plus efficace possible entre les deux oscillateurs couplés.

## Brève description des figures

D'autres caractéristiques et avantages vont apparaître dans la description détaillée qui suit faite en regard des dessins annexés dans lesquels :

- Les figures 1A et 1B représentent, respectivement vu en perspective et vu de dessus, un résonateur mécanique de type SMR ;
- La figure 2 montre des exemples de courbes de déformée d'un résonateur mécanique de type SMR selon différents modes de vibration ;
- Les figures 3A et 3B représentent, respectivement vu en perspective et vu de dessus, un capteur de type NEMS ;
- Les figures 4A et 4B montrent une réalisation particulière du système de mesure de l'invention et illustre son principe de fonctionnement ;
- Les figures 5 à 11 montrent plusieurs variantes de réalisation du système de mesure de l'invention ;
- La figure 12 montre les étapes d'un exemple de procédé de fabrication du système de mesure de l'invention ;

## Description détaillée d'au moins un mode de réalisation

L'invention concerne un système utilisé pour la mesure d'au moins une propriété (par exemple la masse, le volume, la densité) d'une particule. Par particule, on entend par exemple une particule biologique telle que cellule, exosome, virus, bactérie... On entend également par particule, une particule de type inorganique telle que par exemple une particule d'Or, de Polystyrène...

Le système de l'invention repose sur l'utilisation d'au moins deux entités couplées mécaniquement entre elles.

## Résonateur Mécanique SMR ou SNR

- Figure 1A
- Figure 1B
- Figure 2

Une première entité du système est constituée d'un résonateur mécanique 1, plus connu sous le nom de SMR ("Suspended Microchannel Resonator" - ci-après désigné également résonateur SMR) ou de SNR ("Suspended Nanochannel Resonator"), son caractère micro ou nano dépendant notamment des dimensions de son canal fluidique intégré. Un résonateur muni d'un canal fluidique dont la largeur ou l'épaisseur est inférieure à 1$\mu$m sera référencée comme un SNR, autrement il s'agira d'un SMR.

En effet, un tel résonateur mécanique 1 (SMR ou SNR) comporte au moins une partie fixe 10, et une partie suspendue 11 reliée à la partie fixe 10 et capable de vibrer lorsqu'elle est excitée. La partie suspendue 11 se présente classiquement sous la forme d'une poutre s'étendant suivant un axe dit longitudinal.

Il comporte également un circuit fluidique intégré à sa partie suspendue, ce circuit fluidique comprenant au moins un canal fluidique 12 creusé à l'intérieur de sa partie suspendue 11, recouvert de parois étanches sur les quatre faces (dessus, dessous, latéralement) et destiné à être utilisé pour y injecter un fluide dans lequel sont placées une ou plusieurs particules P à caractériser.

Avantageusement, le résonateur mécanique 1 est de type SMR (plutôt qu'un SNR), de manière à pouvoir y faire circuler des particules P de tailles plus importantes, et d'analyser des échantillons complexes (voir ci-après).

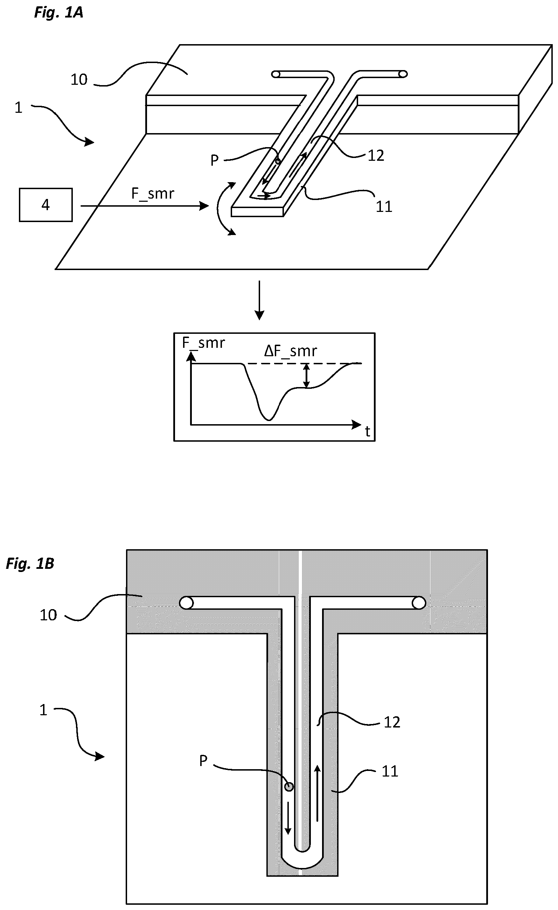

Le système comporte des moyens d'excitation 4 configurés pour faire vibrer la partie suspendue 11 du résonateur mécanique 1 à une fréquence d'excitation F_smr. Cette fréquence d'excitation est avantageusement la fréquence de résonance du résonateur ou une fréquence équivalente à un mode supérieur de cette fréquence de résonance. Dans ce type de résonateur, la vibration est généralement réalisée hors plan (comme indiqué par la flèche courbée sur la figure 1A), mais alternativement elle peut être générée dans le plan, ou encore en torsion. La vibration dans le plan ou hors plan est réalisée dans un plan respectivement horizontal ou vertical lorsque l'axe longitudinal de la poutre est positionné à l'horizontale.

La partie suspendue 11 peut être à encastrement simple, reliée à une seule partie fixe et dotée ainsi d'une extrémité libre en porte à faux. On parlera dans cet exemple d'un "cantilever".

La partie suspendue 11 peut également être à encastrement double, joignant alors deux parties fixes.

La partie suspendue 11 peut également être réalisée sous la forme d'une plaque supportée par plusieurs points d'ancrage.

Quelle que soit son architecture, cette partie suspendue est susceptible d'être mise en vibration pour osciller à la fréquence d'excitation F_smr, cette fréquence étant avantageusement la fréquence de résonance à son mode propre fondamental ou l'un de ses modes propres supérieurs, voire une combinaison de ces modes.

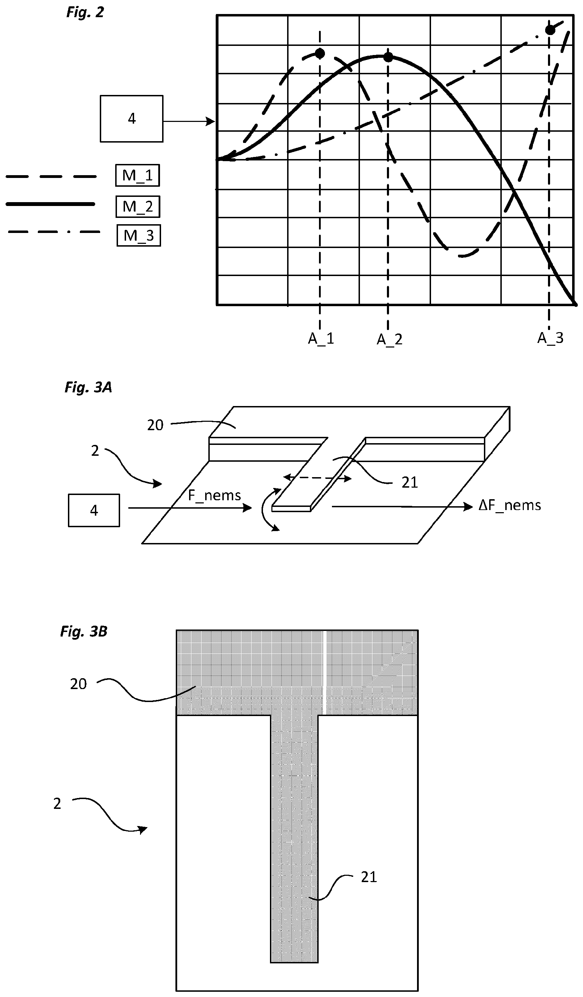

Pour rappel, un tel résonateur mécanique 1 peut être excité selon plusieurs modes de vibration, désignés par exemple M_1, M_2, M_3 sur la figure 2. Dans cet exemple, il s'agit d'une vibration en flexion hors-plan.

Pour chaque mode de vibration, le résonateur présente des nœuds de vibration et des anti-nœuds de vibration.

Pour rappel, un anti-nœud de vibration correspond à une zone de la partie suspendue où l'amplitude de vibration est maximale pour le mode de vibration sollicité.

La figure 2 indique la présence des anti-nœuds de vibration A_1, A_2, A_3 pour chacun des trois modes de vibration.

Par un gradient de pression imposé entre les ports situés en amont et aval du canal fluidique 12 intégré à la partie suspendue 11, il est possible de contrôler l'écoulement du fluide (son débit et sens d'écoulement) dans le canal fluidique 12, et donc le passage de particules P en suspension dans le canal fluidique du résonateur mécanique 1. Lorsqu'une particule P circule dans le canal fluidique du résonateur, celle-ci altère transitoirement la masse (de Δm) de la partie suspendue 11 du résonateur 1, entraînant un décalage de sa fréquence (de résonance) qui est proportionnel à la masse flottante de la particule.

Le décalage de la fréquence ΔF_smr (figure 1A) du résonateur dépend en effet de la masse ajoutée Δm, de la masse totale m du résonateur ainsi que d'un coefficient de correction $\alpha$ qui dépend spécifiquement de la position de la particule P ajoutée, selon la relation suivante :

$$\frac{\Delta F\_smr}{F\_smr} = -\propto \frac{\Delta m}{m}$$

Ainsi, lorsqu'une particule de masse flottante Δm donnée est injectée dans le canal fluidique 12 du résonateur, on obtient un maximum d'amplitude de vibration lorsque cette particule P est située au niveau de l'anti-nœud de vibration (pour le mode de vibration M_1 par exemple) et donc un décalage de fréquence maximum. Notons, que selon la différence de densité entre la particule et le fluide porteur, la masse flottante Δm sera positive (dans le cas d'une particule plus dense) ou négative (dans le cas d'une particule moins dense).

**Capteur gravimétrique**

- Figure 3A
- Figure 3B

La deuxième entité du système est constituée d'un capteur gravimétrique 2 (ci-après désigné également capteur NEMS). A titre d'exemple, ce capteur gravimétrique 2 est avantageusement réalisé sous la forme d'un NEMS (Nano Electro-Mechanical System). Ce type de capteur gravimétrique repose également sur un oscillateur mécanique, mis en vibration à une fréquence de vibration F_nems, et dépourvu de canal fluidique.

Il comporte ainsi une partie fixe 20 et une partie suspendue 21 reliée à sa partie fixe et capable de vibrer par rapport à la partie fixe 20 lorsqu'elle est excitée.

La partie suspendue 21 se présente classiquement également sous la forme d'une poutre s'étendant suivant un axe dit longitudinal.

A l'inverse du résonateur mécanique 1, chargé de faire circuler les particules P dans son canal fluidique 12, le capteur gravimétrique 2 ne comporte pas de circuit fluidique. Il n'est utilisé que comme moyen de mesure des fluctuations de fréquence (voir ci-après).

Les moyens d'excitation 4 du système sont configurés pour faire vibrer la partie suspendue 21 du capteur gravimétrique 2 à la fréquence de vibration F_nems. On verra que la mise en vibration du capteur NEMS peut être réalisée via le résonateur mécanique 1 et la liaison mécanique entre les deux éléments, sans moyens d'excitation externes. Dans ce type de capteur, la vibration est généralement réalisée hors plan (comme indiqué par la flèche en trait plein sur la figure 3A) ou alternativement dans le plan (comme indiqué par la flèche en pointillés sur la figure 3A). Une variante de vibration peut se faire selon un mode de torsion. La vibration dans le plan ou hors plan est réalisée dans un plan respectivement horizontal ou vertical lorsque l'axe longitudinal de la poutre est positionné à l'horizontale.

La fréquence de vibration F_nems est par exemple égale à une valeur pouvant aller de -30% à +30% de la valeur de la fréquence d'excitation F_smr du résonateur mécanique, avantageusement sa fréquence de résonance ou celle de son mode propre supérieur. Cette fréquence de vibration F_nems est choisie avantageusement voisine de la fréquence de résonance F_smr du résonateur mécanique 1 ou celle de son mode propre supérieur afin d'harmoniser la vibration des deux entités suspendues.

## Couplage mécanique

- Figure 2
- Figure 4A
- Figure 4B

Le principe de l'invention repose sur un couplage mécanique entre un résonateur mécanique 1 tel que décrit ci-dessus avec un capteur gravimétrique 2 tel que décrit ci-dessus.

Le couplage mécanique est réalisé en intégrant un élément 3 de liaison mécanique entre la partie suspendue 11 du résonateur mécanique et la partie suspendue 21 du capteur gravimétrique. Cet élément 3 de liaison mécanique est par exemple une simple poutre réalisant la jonction entre les deux parties suspendues. Il peut notamment s'agir d'une ou plusieurs nano-poutres obtenues selon le procédé de fabrication mis en œuvre.

Le résonateur mécanique 1 est ainsi utilisé pour acheminer les particules P en circulation dans son canal fluidique 12. Il est mis en vibration à sa fréquence d'excitation F_smr (avantageusement sa fréquence de résonance ou un mode propre supérieur de celle-ci). Le capteur gravimétrique 2 est également excité à la fréquence de vibration F_nems, avantageusement voisine de la fréquence d'excitation du résonateur mécanique et est utilisé pour réaliser la mesure des fluctuations de fréquence au niveau du résonateur 1 lorsque celui-ci reçoit une particule dans son canal fluidique 12.

Le couplage mécanique du résonateur mécanique 1 (avantageusement de type SMR) avec le capteur gravimétrique 2 (avantageusement de type NEMS) et la lecture des fluctuations de fréquence au niveau du capteur gravimétrique 2 permettent de :

- Couvrir une gamme de particules P plus étendue que lorsque l'on utilise un résonateur mécanique seul (par exemple un SNR), notamment en termes de taille d'objets à peser ; le canal fluidique 12 intégré au résonateur de type SMR est élargi (par exemple $20 \times 20 \mu m^2$ pour un résonateur SMR contre $0,7 \times 0,7 \mu m^2$ pour un résonateur de type SNR, soit un gain d'environ 816 en termes de ratio de surface). Le corollaire de cette augmentation de la section fluidique est la diminution de la résistance fluidique et donc l'augmentation du débit à gradient de pression identique.
- Réduire les risques de colmatage inhérents aux canaux nano-fluidiques des résonateurs de type SNR,
- Offrir une limite de détection en masse comparable à celle des résonateurs de type SNR (limite de détection de l'ordre de l'attogramme actuellement) grâce à la lecture des fluctuations de fréquence au niveau du capteur gravimétrique NEMS couplé mécaniquement au résonateur de type SMR.

La poutre (ou partie suspendue) 12 du résonateur mécanique 1 est capable d'être excitée selon plusieurs modes de vibration (par exemple M_1, M_2, M_3), chacun de ces modes se traduisant par une déformation de la poutre 12 présentant localement des nœuds et ventres de vibration (appelés également anti-nœuds) à différents endroits prédéterminés par les lois de la mécanique et dynamique des structures. Pour rappel, un anti-nœud A_1, A_2, A_3 de vibration correspond à une zone où l'amplitude de vibration est maximale.

Le couplage mécanique du capteur NEMS 2 avec le résonateur SMR est avantageusement conçu pour maximiser la transmission des ondes vibratoires entre les deux oscillateurs, et limiter autant que possible l'amortissement des oscillations de l'un et de l'autre, généré par ce couplage.

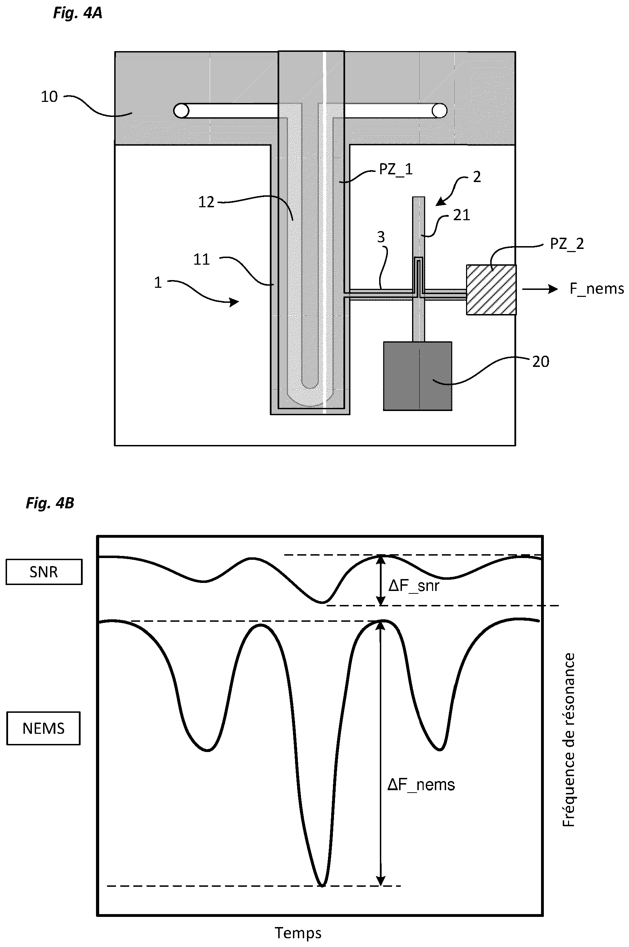

Il est important que toute fluctuation ΔF_smr de la fréquence d'excitation du résonateur SMR 1 se traduise par une variation ΔF_nems de fréquence au niveau du capteur NEMS 2 (figure 4B). Un exemple consiste à disposer la liaison mécanique au niveau d'un anti-nœud de vibration du résonateur SMR 1 sur le mode de vibration pour lequel ce dernier est actionné afin de maximiser la transduction entre celui-ci et le capteur NEMS.

**Moyens d'excitation**

- Figure 4A

Il faut noter que plusieurs modes de transduction/excitation sont envisageables pour :

- Actionner le résonateur SMR et le capteur gravimétrique NEMS à la fréquence choisie (par exemple fréquence de résonance pour le SMR et fréquence de vibration pour le NEMS), et
- Permettre la mesure de la fréquence et de ses fluctuations au niveau du capteur gravimétrique NEMS.

La mise en vibration du capteur NEMS peut être obtenue uniquement et directement via la liaison mécanique qui existe entre la partie suspendue 11 du résonateur mécanique 1 et la partie suspendue 21 du capteur NEMS. Elle peut être obtenue également par la commande des moyens d'excitation 4, configurés pour exciter à la fois (voir ci-dessous la combinaison avantageuse) la partie suspendue 11 du résonateur mécanique 1 à la fréquence d'excitation (par exemple fréquence de résonance fondamentale ou un mode propre supérieur de celle-ci) et la partie suspendue 21 du capteur NEMS à la fréquence de vibration souhaitée.

Préférentiellement, une combinaison avantageuse est basée sur :

- Un actionnement/excitation par effet piézoélectrique (en amenant par exemple une piézocéramique au contact de la face arrière du composant) pour actionner simultanément le résonateur SMR et le capteur NEMS. La piézocéramique est collée sur un circuit imprimé, lui-même conçu pour lui appliquer un potentiel électrique qui va déformer le matériau piézoélectrique. La mise en vibration de ce dernier est réalisée en lui appliquant par exemple un signal électrique à la fréquence de résonance du capteur SMR ou NEMS, ou un signal comportant les différents signaux fréquentiels correspondant aux modes des oscillateurs présents sur la puce. L'avantage de cette configuration réside dans le fait que le signal appliqué peut actionner collectivement les différents oscillateurs présents sur le composant (NEMS et SMR) et les différents modes de résonance souhaités pour chacun d'entre eux. Il s'agit donc d'une approche tout à fait adaptée pour un réseau d'oscillateurs.
- Une lecture par effet piézorésistif en implantant par exemple la couche NEMS avec des dopants et une concentration adaptée, soit localement pour y délimiter une jauge à l'encastrement du capteur NEMS ou en pleine surface en exploitant la structuration de nano-jauges de contraintes suspendues reliant par exemple le capteur NEMS, soit au résonateur SMR soit à des plots fixes.

Un actionnement par couplage capacitif est également une solution possible. Dans ce cas, il est nécessaire d'intégrer une électrode au plus proche du capteur NEMS 2 et du résonateur SMR 1 si celui-ci a également besoin de cette source d'actionnement. Ce mode de transduction est bien adapté pour des modes de vibrations latéraux mais nécessite que la partie suspendue oscillante et l'électrode d'actionnement qui est située en vis-à-vis soient suffisamment conducteurs pour que l'on puisse disposer d'une capacité de transduction.

Sur la figure 4A, on a représenté la zone de localisation d'une piézorésistance PZ_1 (via un dopage - par exemple au Bore) au niveau de la partie suspendue 11 du résonateur SMR 1 et de de la partie suspendue 21 du capteur NEMS, cette zone se terminant par la présence d'une jauge piézorésistive PZ_2 en prolongement de l'élément de liaison 3 entre le résonateur SMR et le capteur NEMS. Cette solution permet de déterminer les variations de fréquence au niveau du capteur NEMS 2, car les variations de courant dans la piézorésistance seront maximales à la fréquence de résonance du capteur NEMS.

**Variantes de réalisation du système**

- Figures 4A à 11

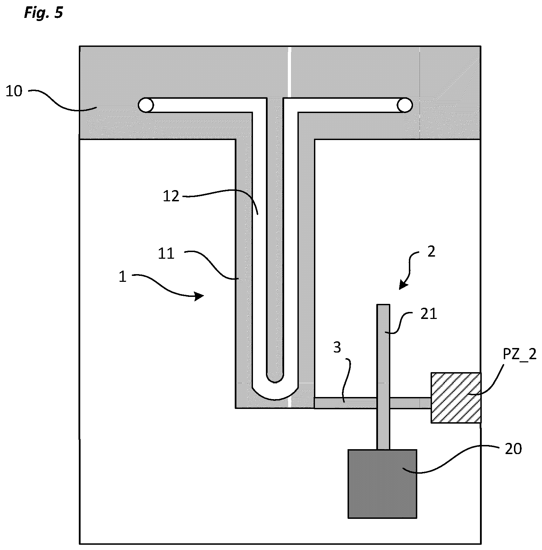

Partant de ces principes, la liaison mécanique entre la poutre du résonateur SMR et celle du capteur NEMS peut être réalisée selon différentes configurations. Il faut également noter qu'il est possible de coupler mécaniquement un seul résonateur SMR à plusieurs capteurs NEMS (par exemple deux capteurs NEMS). Les moyens de mesure (par exemple via piézorésistivité - PZ_1 + PZ_2) ne sont pas représentés sur les figures 5 à 11 mais il faut considérer qu'ils sont bien entendu présents.

Il faut noter que dans toutes les configurations, les deux parties suspendues 11, 21 s'étendent, suivant leur axe longitudinal, en parallèle l'une de l'autre et l'élément de liaison 3 s'étend, suivant son axe longitudinal, perpendiculairement aux deux parties suspendues et crée ainsi une jonction entre les deux parties suspendues.

Les figures 4A à 11 illustrent plusieurs configurations envisageables. Celles-ci sont à considérer de manière non limitative. Dans chaque configuration, côté capteur NEMS 2, l'élément 3 de liaison mécanique est fixé au niveau d'un anti-nœud de vibration pour l'un de ses modes de vibration. Et côté résonateur SMR 1, l'élément 3 de liaison mécanique est fixé dans une zone de sa partie suspendue qui correspond à un anti-nœud pour un ou plusieurs modes de vibration. Il faut noter que la poutre formant l'élément de liaison mécanique peut être formé de plusieurs nano-poutres.

- Figure 4A - Un résonateur SMR + un capteur NEMS : Une poutre 11 à encastrement simple du résonateur SMR 1 est couplée mécaniquement à la poutre 21 d'un capteur NEMS par une liaison mécanique latérale. Dans cet exemple, l'élément 3 de liaison mécanique, formé d'une poutre de couplage, est situé au niveau du premier anti-nœud de la poutre 11 du résonateur SMR depuis son encastrement, pour son second mode de vibration en flexion hors-plan.
- Figure 5 - Un résonateur SMR + un capteur NEMS : Une poutre 11 à encastrement simple du résonateur SMR 1 est couplée mécaniquement à la poutre 21 d'un capteur NEMS par une liaison mécanique latérale. Dans cet exemple, l'élément 3 de liaison mécanique, formé d'une poutre de couplage, est situé au niveau de l'extrémité libre de la poutre 11, soit au niveau d'un anti-nœud pour son premier, deuxième et troisième mode de vibration en flexion hors-plan.

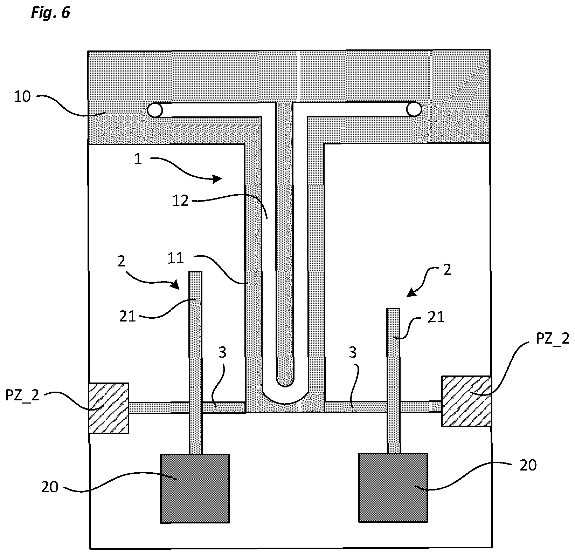

- Figure 6 : Un résonateur SMR + un ou deux capteurs NEMS : Une poutre à encastrement simple du résonateur SMR est couplée mécaniquement à la poutre d'un capteur NEMS ou de chacun des deux capteurs NEMS, par une liaison mécanique latérale située à son extrémité libre, soit au niveau d'un anti-nœud pour son premier, deuxième et troisième mode de vibration en flexion hors-plan. Les mêmes références sont conservées pour les deux capteurs NEMS.

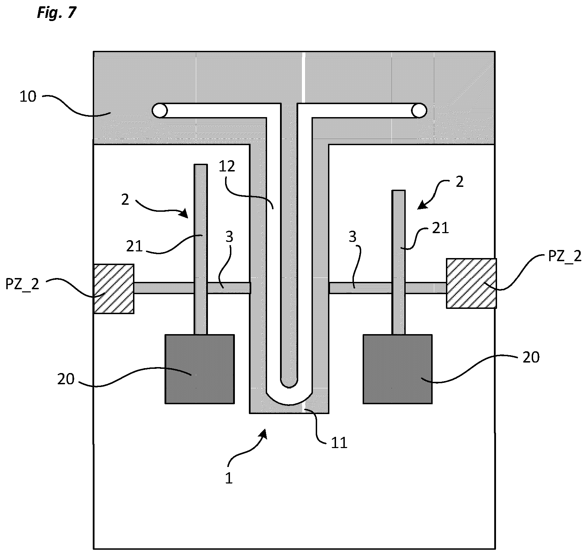

- Figure 7 : Un résonateur SMR + un ou deux capteurs NEMS : Une poutre à encastrement simple du résonateur SMR est couplée mécaniquement à la poutre 21 d'un capteur NEMS ou de chacun des deux capteurs NEMS, par une liaison mécanique latérale, située au niveau du premier anti-nœud de la poutre du résonateur SMR depuis son encastrement pour son second mode de vibration en flexion hors-plan.

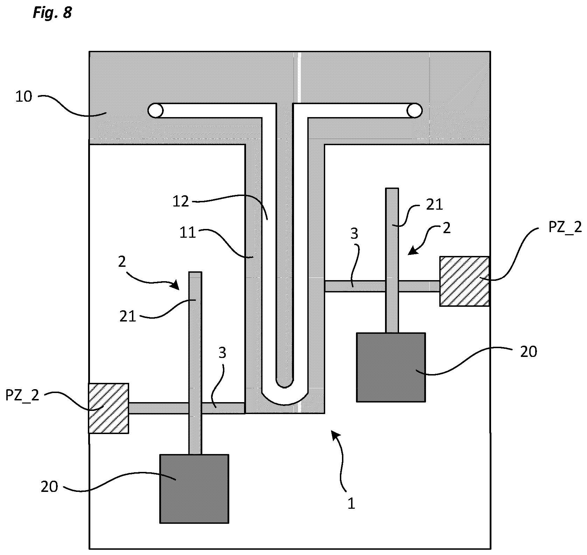

- Figure 8 : Un résonateur SMR + deux capteurs NEMS : Une poutre à encastrement simple du résonateur SMR est couplée mécaniquement à la poutre de chacun des deux capteurs NEMS, par une première liaison mécanique latérale située au niveau de son extrémité libre, et par une deuxième liaison mécanique au niveau de son premier anti-nœud de la poutre SMR depuis son encastrement pour son second mode de vibration en flexion hors-plan.

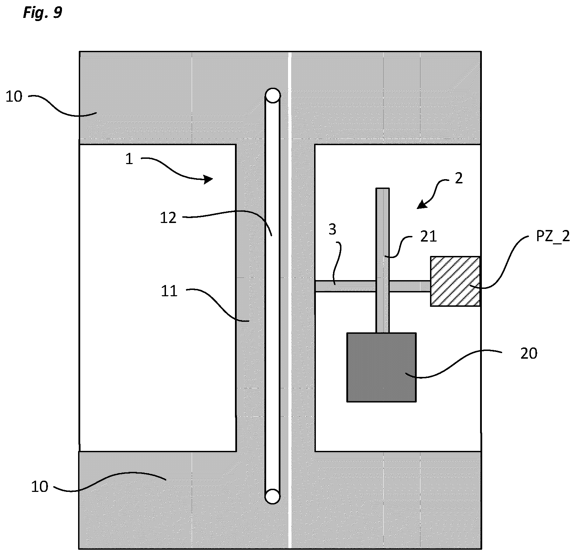

- Figure 9 : Résonateur SMR + un capteur NEMS : La poutre du résonateur SMR est bi-encastrée (entre deux parties fixes 10) et couplée mécaniquement à un capteur NEMS par une liaison mécanique latérale située sur un anti-nœud pour son premier mode de vibration en flexion hors-plan (ou dans le plan également).

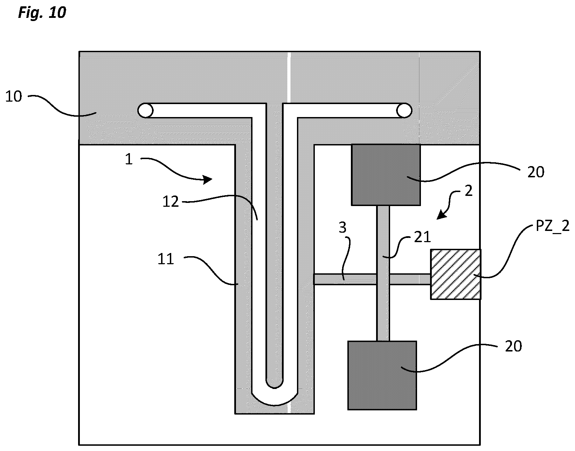

- Figure 10 - Un résonateur SMR + un capteur NEMS : Une poutre 11 à encastrement simple du résonateur SMR 1 est couplée mécaniquement à la poutre 21 d'un capteur NEMS par une liaison mécanique latérale. Dans cet exemple, l'élément 3 de liaison mécanique, formé d'une unique poutre de couplage, est situé au niveau du premier anti-nœud de la poutre du résonateur SMR depuis son encastrement pour son second mode de vibration en flexion hors-plan. De plus, le capteur NEMS est réalisé sous la forme d'une poutre bi-encastrée (entre deux parties fixes 20). L'élément 3 de liaison est relié sur cette poutre sur un anti-nœud du capteur NEMS pour son premier mode de vibration en flexion hors-plan (ou dans le plan également).

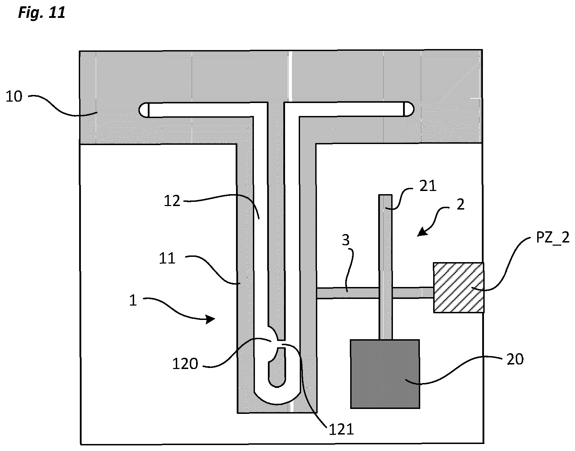

- Figure 11 - Un résonateur SMR + un capteur NEMS : Le circuit fluidique du résonateur SMR dispose ici d'une ou plusieurs zones de piégeage, dédiées chacune à accueillir une particule. Par ce biais il est possible de piéger une ou plusieurs particules (par exemple des cellules) dans le circuit fluidique et de suivre notamment, avec la précision du capteur NEMS 2 qui lui est couplé, différents paramètres comme le taux de croissance en masse de la particule lors de son exposition à une drogue (pour en évaluer l'efficacité), la croissance de la particule dans un milieu ou la sécrétion de particules virales ou exosomes. En lieu et place d'une cellule, on peut piéger une (ou plusieurs) bille fonctionnalisée (recouverte d'anticorps ou d'aptamères) et suivre la cinétique de greffage avec des cibles du type protéines par exemple. Le piège hydrodynamique est réalisé sous la forme d'une branche de dérivation par rapport au canal fluidique 12 du résonateur SMR 1 et comporte un logement 120 dimensionné pour accueillir la particule P et une restriction 121 prolongeant ledit logement.

Une combinaison des caractéristiques des différentes réalisations décrites ci-dessus est également envisageable.

## Réalisation particulière

De manière non limitative, le résonateur SMR 1 et le capteur NEMS 2 sont choisis à poutre encastrée libre ("cantilever" - une partie suspendue reliée à une seule partie fixe). La longueur et l'épaisseur du capteur NEMS 2 sont choisies de sorte que sa fréquence fondamentale selon le premier mode de flexion vertical coïncide avec la fréquence de résonance pour le second mode de flexion verticale du résonateur SMR.

Le tableau ci-après donne un exemple de dimensionnement :

|  | Longueur et largeur (μm) | Largeur et profondeur (μm) canal intégré | Largeur muret intérieur et murs extérieurs | Epaisseur totale (μm) | F0 /F2nd mode (Hors plan) |
|---|---|---|---|---|---|
| SMR | 200 / 33 | 8/3 | 5/6 | 3,4232 | 116,12kHz 727,7656kHz |
| NEMS | 19,5 / 0,5 |  |  | 0,2 | 725,67kHz / 4,548 MHz |

A titre d'exemple, le résonateur SMR 1 dispose d'une poutre 11 encastrée simple, d'un canal de 3μm de profondeur, de 8μm de largeur, d'un muret central de 5μm de large, et de parois externes de 6μm de large, soit une largeur totale de 33μm.

La poutre 11 du résonateur SMR a une longueur de 200μm, et l'épaisseur des membranes inférieures et supérieures recouvrant le canal enterré est de 200nm. En tenant compte de la couche d'oxyde d'interface de collage pour le scellement du capot supérieur, on estime que l'épaisseur totale du résonateur SMR est de 3,4232μm. Cet ensemble de paramètres dimensionnels conduit à une fréquence de résonance théorique estimée aux alentours de 116,12kHz pour son mode fondamental en flexion hors-plan, et de 727,766kHz pour son second mode de flexion. En supposant une variance d'Allan de l'ordre du ppm ($10^{-6}$), on estime une limite de détection en masse de 14,4fg.

En considérant une poutre 21 d'un capteur NEMS 2 qui est couplée mécaniquement au résonateur SMR, le couplage s'effectue par exemple par le biais d'une ou plusieurs nano-poutres 3 suspendues localisées perpendiculairement à l'axe longitudinal de la poutre du résonateur SMR, au niveau du premier anti-nœud du second mode en flexion du résonateur SMR depuis son encastrement (figure 4A).

On suppose par exemple que le capteur NEMS et ses nano-poutres ont une épaisseur équivalente à celle du capot supérieur recouvrant le canal fluidique du résonateur SMR. On dimensionne la largeur et la longueur de la poutre 21 du capteur NEMS 2 de sorte que sa fréquence de résonance selon son mode propre fondamental hors-plan ait une valeur similaire, sinon proche de la fréquence du second mode de flexion du résonateur SMR.

Pour le dimensionnement du capteur NEMS 2, en relation avec la fréquence de travail du SMR, on s'appuie sur la formule analytique suivante issue de l'application du théorème d'Euler-Bernouilli :

$$f_n = \frac{\lambda_n^2}{2\pi}\sqrt{\frac{EI}{\rho S}}$$

Où E désigne le module de Young, S correspond à la section de la poutre NEMS en oscillation, I son moment d'inertie selon la direction des vibrations. $\lambda_n$ est une valeur propre déterminée en fonction de l'ordre du mode, son type (flexion, torsion...) et les conditions aux limites de la poutre obtenue en résolvant l'équation différentielle du mouvement de la poutre rappelée ci-dessous, en l'absence d'amortissement et de forces externes actionnant celle-ci :

$$EI\frac{\partial^4 y(x,t)}{\partial^4 x} + \rho S\frac{\partial^2 y(x,t)}{\partial^2 t} = 0$$

Dans le cas où l'on considère une flexion selon une direction hors-plan :

$$f_n = \frac{\lambda_n^2 t}{4\pi}\sqrt{\frac{E}{3\rho}}$$

Avec :

$$I = \frac{wt^3}{12}$$

et w et t qui désignent respectivement la largeur et l'épaisseur de la poutre du capteur NEMS.

Le tableau suivant liste les valeurs de $\lambda_n$ pour des poutres à encastrement simple et bi-encastrées :

|  | $\Lambda_1$ | $\Lambda_2$ | $\Lambda_3$ | $\Lambda_4$ |
|---|---|---|---|---|
| Encastrement simple | 1,875 | 4,694 | 7,854 | 10,995 |
| Bi-encastrement | 4,73 | 7,853 | 10,995 | 14,14 |

Etant donné l'équation, on peut déduire l'expression du mode fondamental de résonance d'une poutre NEMS bi-encastrée donné par la formule suivante :

$$f_1 = \frac{t}{L^2}\frac{4,73^2}{4\pi}\sqrt{\frac{E}{3\rho}}$$

Par conséquent :

$$L = 4,73\sqrt{\frac{t}{4\pi f_1}\sqrt{\frac{E}{3\rho}}}$$

Et pour une poutre à encastrement simple, on obtient :

$$L = 1,875\sqrt{\frac{t}{4\pi f_1}\sqrt{\frac{E}{3\rho}}}$$

Pour une épaisseur de 200nm de la poutre 21 du capteur NEMS 2, si on considère par exemple une longueur de 19,5$\mu$m et une largeur de 0,5$\mu$m, on estime une valeur de fréquence propre fondamentale de 725,67kHz, soit une erreur de 0,2% par rapport à la valeur estimée du second mode de résonance en flexion hors-plan du résonateur SMR. Si à présent la longueur de la poutre du capteur NEMS est de 19,48$\mu$m, on estime alors une valeur de fréquence propre fondamentale de 727,161kHz soit une erreur réduite à 0,08% par rapport à la valeur estimée du second mode du résonateur SMR 1. En revanche, maîtriser la longueur de la poutre 21 du capteur NEMS 2 avec une résolution dimensionnelle de l'ordre 10nm paraît incompatible à ce jour avec la précision des procédés de nano-fabrication combinant lithographie et nano-gravure. On suppose une variance d'Allan de l'ordre du ppm ($10^{-6}$) pour le capteur NEMS.

On estime pour son mode fondamental en flexion hors-plan une limite de détection en masse du capteur NEMS de 2,14 ag, soit un gain de 6728 par rapport à la limite de détection du résonateur SMR.

Comme attendu, la réduction en taille du capteur NEMS 2, est donc favorable à l'amélioration (ici de trois ordres de grandeurs) de la limite de détection en masse par rapport au résonateur SMR 1 seul.

## Applications

On liste ci-après quelques exemples d'applications possibles du système de l'invention, tirant profit de la versatilité offerte par la section accrue du canal fluidique 12 du résonateur SMR 1 par rapport à sa version nanométrique (SNR), combinée à la sensibilité de mesure en masse du capteur NEMS 2.

- Peser des échantillons polydisperses, contenant des particules (qu'elles soient inorganiques, biologiques, synthétiques ou un mélange de ces différents objets) avec des échelles de taille allant de quelques nanomètres à quelques micromètres (étant donné la section du canal fluidique du résonateur SMR qui est d'environ 20x20$\mu$m$^2$).
- Peser des échantillons biologiques complexes hétérogènes, par exemple du sang, ou autres biofluides, dans lesquels coexistent par exemple des cellules (globules rouges, lymphocytes, cellules tumorales circulantes), de l'ADN circulant, de l'ARN circulant, des protéines, des débris cellulaires, des vésicules extra-cellulaires (EVs), des exosomes, potentiellement des virus ou encore des bactéries. Cet ensemble présente des gammes de taille allant du nm à plusieurs $\mu$m, et des masses flottantes allant de 0,1 attograme à plusieurs picogrammes.
- Isoler une cellule biologique dans le canal fluidique du résonateur SMR, par piégeage de celle-ci dans un piège hydrodynamique (voir variante de la figure 11). Etant donné la résolution en masse du capteur NEMS 2, il serait possible de mesurer avec une précision de l'ordre de l'attogramme, le taux d'accroissement ou perte de masse de la cellule consécutive soit à sa croissance ou mort cellulaire ou encore à sa réaction au sens large à l'exposition d'une molécule (médicaments). Une autre caractéristique de ce piégeage "in-situ", combinée à la résolution en masse du capteur NEMS concerne le suivi dynamique de transfection cellulaire par des cibles telles que des nanoparticules virales (des adénovirus par exemple) ou réciproquement la production et sécrétion de nanoparticules virales ou encore de vésicules extra-cellulaires (EVs), objets caractérisés par une masse flottante allant de quelques attogrammes à quelques centaines d'attogrammes. Cette capacité de suivi en temps réel des sécrétions peut également être mise en œuvre par piégeage de la cellule en amont du canal fluidique intégré dans le résonateur SMR, ce qui permet de suivre clairement la cinétique de production des sécrétions qui s'écoulent dans le canal fluidique du résonateur SMR, sans biais possible avec le taux d'accroissement de masse intrinsèque à la cellule.

- Un autre exemple concerne la mise en évidence par pesée de biomarqueurs cibles, soit par greffage à la surface préalablement fonctionnalisée du canal fluidique intégré dans le résonateur SMR, ou encore par greffage sur une ou plusieurs billes piégées dans le résonateur SMR par le biais de pièges hydrodynamiques. De nouveau, l'avantage de cette invention par rapport à la technologie SNR réside dans le fait que la bille piégée peut être beaucoup plus large, de plusieurs micromètres de diamètre, sa surface développée permettant d'accueillir un nombre de sondes beaucoup plus important que le permettrait une bille sub-micrométrique piégée dans un SNR.

## Fonctionnement

On considère un système selon la réalisation particulière décrite ci-dessus et qui comporte :

- Un résonateur mécanique 1 de type SMR ;
- Un capteur gravimétrique 2 de type NEMS ;
- Un élément de liaison 3 couplant mécaniquement la partie suspendue du résonateur SMR au capteur gravimétrique NEMS ;

Pour calibrer la sensibilité massique du capteur NEMS 2 par rapport aux variations de masse consécutives au passage de particule dans le résonateur SMR, on fait circuler dans le canal fluidique du résonateur SMR une population monodisperse de nanoparticules de référence (c'est-à-dire de densité et taille connue à priori), telles que des nanoparticules d'Or. Le passage de chaque nanoparticule dans le canal fluidique 12 du résonateur SMR 1, se traduit par une modification transitoire de sa masse effective $m_{eff}$, et donc un décalage en fréquence qui est propagé dans la partie suspendue 21 du capteur NEMS 2 qui lui est couplé mécaniquement. Le décalage en fréquence $\Delta F\_nems$ mesuré par le capteur NEMS 2 doit à priori être maximal lorsque la particule est positionnée à un endroit du canal fluidique du résonateur SMR où le couplage mécanique entre le résonateur SMR et le capteur NEMS est optimal.

Dans l'invention, comme indiqué ci-dessus, il s'agit d'une position dans laquelle la nanoparticule est située sur un maximum de vibration (anti-nœud) du résonateur SMR 1.

En mesurant le décalage de fréquence $\Delta F\_nems$ mesuré à l'aide du capteur NEMS 2, on en déduit une sensibilité exprimée en grammes par Hertz. Une fois cette sensibilité calibrée, il est possible ensuite d'injecter un échantillon dans le résonateur SMR 1 et de déduire la masse des particules qui y circulent, sans connaître préalablement leur densité.

L'avantage de cette invention réside dans le fait que la gamme dynamique de taille des particules et cibles circulant dans le canal fluidique 12 du résonateur SMR 1 est étendue (par rapport aux technologies de type SNR seul).

Le couplage mécanique du capteur NEMS 2 avec le résonateur SMR 1 est conçu avantageusement pour que la liaison mécanique s'effectue au niveau d'un ventre de vibration (également appelé anti-nœud) du résonateur SMR 1 sur le mode de vibration pour lequel ce dernier est actionné afin de maximiser la transduction entre celui-ci et le capteur NEMS.

Les particules P d'intérêt sont acheminées dans le canal fluidique 12 du résonateur mécanique 1 de type SMR. Leur circulation dans le résonateur SMR 1 entraîne un décalage $\Delta F\_smr$ transitoire de la fréquence de résonance du résonateur SMR 1 comme c'est le cas pour les résonateurs SMR classiques (pris seul, c'est-à-dire sans couplage mécanique).

En revanche, selon l'invention, la lecture de cette variation fréquentielle s'effectue par l'intermédiaire du suivi de fréquence du capteur NEMS 2 qui est couplé mécaniquement au résonateur SMR. Comme le capteur NEMS possède une partie suspendue 21 ayant une masse effective (fraction de la masse totale du NEMS, et qui dépend du mode de vibration sollicité) réduite en comparaison de la masse effective de la partie suspendue 11 du résonateur SMR, sa limite de détection est en théorie beaucoup plus faible, même avec une stabilité fréquentielle de l'ordre du ppm. Il est donc plus aisé de lire la variation de fréquence $\Delta F\_nems$ au niveau du capteur NEMS 2.

## Fabrication

- Figure 12

Le système de l'invention peut être fabriqué en s'appuyant sur les techniques déjà utilisées pour la fabrication des solutions SMR et SNR.

Il s'agit par exemple d'utiliser deux substrats SOI ("Silicon On Insulator") collés l'un sur l'autre (face avant sur face avant) par scellement moléculaire, selon l'arrangement suivant :

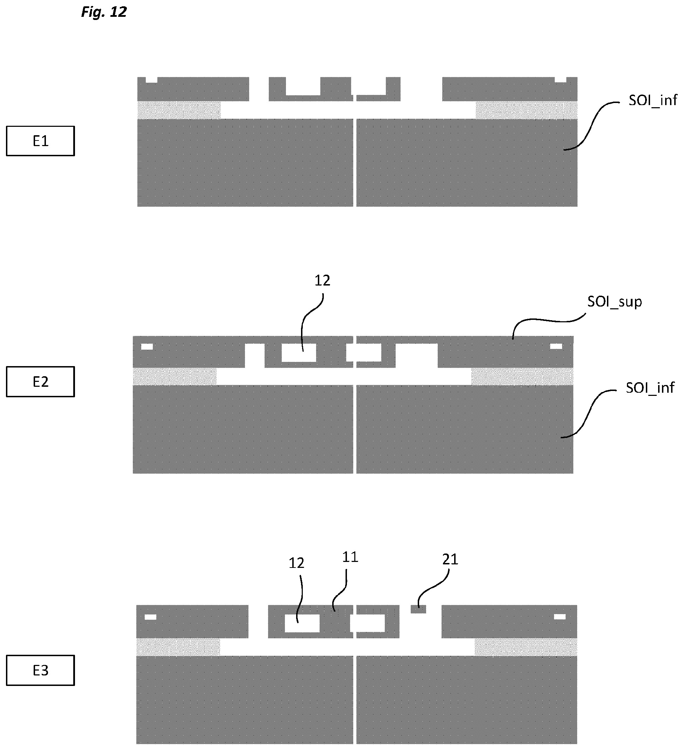

- Un substrat SOI inférieur (noté SOI_inf sur la figure 12) dont la couche active en silicium (d'épaisseur typique de l'ordre de 20$\mu$m pour un SMR) est gravée partiellement afin d'y délimiter la forme du canal fluidique qui est intégré au résonateur SMR,
- Un substrat SOI (noté SOI_sup sur la figure 12) supérieur dont la couche active en silicium est scellée par scellement moléculaire direct sur la face supérieure du substrat SOI inférieur.

Les étapes principales de fabrication sont par exemple les suivantes :

E1 : Gravure du canal fluidique 12 dans le substrat SOI inférieur comme il est pratiqué d'usage pour la technologie SMR ou SNR ;

Lithographie et gravure sèche pour graver la couche active en silicium du substrat SOI inférieur sur toute son épaisseur. Cette étape permet de définir un ou plusieurs trou(s)/cavité(s) adjacente(s) à l'empreinte du canal fluidique dans le résonateur SMR. Gravure chimique de la couche d'oxyde enterrée (appelée BOX = buried oxide) exposée à travers ces trous. Cette gravure chimique conduit notamment à la suspension de ce qui constituera la partie suspendue 11 du résonateur SMR 1 ou une fraction de sa surface. Précisons qu'au minimum un ou plusieurs trous sont positionnés à l'aplomb de la future partie suspendue du capteur NEMS 2 et de ses nanopoutres de connexion avec le résonateur SMR qui seront gravés ultérieurement.

E2 : Une fois les trous ou cavités réalisés, on procède ensuite au scellement moléculaire sur la face avant de cet empilement avec le substrat SOI supérieur dont l'épaisseur de la couche active correspond à l'épaisseur du futur capteur NEMS 2 et de ses nanopoutres (=élément 3 de liaison).

Amincissement du substrat SOI supérieur. La couche active résiduelle du substrat SOI supérieur sert dont à refermer de manière étanche le canal fluidique intégré au futur résonateur SMR, et sert également de matériau structurel dans lequel seront délimitées ultérieurement la forme du capteur NEMS 2, ainsi que ses éléments de connexion mécanique au résonateur SMR et éventuelles nano-jauges de contraintes pour une mesure piézorésistive.

E3 : Gravure du contour de la partie suspendue 11 du résonateur SMR 1, de la partie suspendue 21 du capteur NEMS, son/ses éléments de couplage mécanique avec le SMR, et tous autres motifs nécessaires à la mise en œuvre du composant.

D'autres étapes sont ensuite mises en œuvre pour finaliser la fabrication du système, notamment scellement d'un capot fluidique en verre, structuration pour délimiter des cavités nécessaires au fonctionnement.

D'autres techniques de fabrication pourraient bien entendu être employées.

L'invention présente ainsi de nombreux avantages, parmi lesquels :

- Elle exploite les petites dimensions du capteur gravimétrique de type NEMS et on tire profit de sa faible masse effective, et donc de sa limite de détection améliorée par rapport à celle du résonateur mécanique de type SMR.
- En couplant le capteur gravimétrique NEMS au résonateur mécanique de type SMR, on utilise l'avantage qu'a ce dernier pour y injecter des échantillons plus complexes que s'ils étaient injectés dans un résonateur SNR (pris seul) aux dimensions de canaux beaucoup plus petites.


**Revendications**

1. Système de mesure d'au moins une propriété d'une particule (P), comprenant :

   - Un résonateur mécanique (1) comportant au moins une première partie fixe (10) et une première partie suspendue (11) apte à vibrer par rapport à la première partie fixe, et un circuit fluidique intégrée dans sa partie suspendue, dans lequel est amené à circuler un fluide contenant ladite particule (P),
   - Des moyens d'excitation (4) configurés pour faire vibrer la première partie suspendue (11) à une fréquence d'excitation (F_smr),
   - **Caractérisé en ce qu'**il comporte :

     - Un premier capteur gravimétrique (2) comprenant au moins une deuxième partie fixe (20) et une deuxième partie suspendue (21) apte à vibrer par rapport à la deuxième partie fixe (20) à une fréquence de vibration (F_nems),

- La première partie suspendue (11) du résonateur mécanique (1) et la deuxième partie suspendue (21) du premier capteur gravimétrique (2) étant couplées mécaniquement entre elles via un élément (3) de liaison mécanique,
- Des moyens de mesure des variations de la fréquence de vibration de la deuxième partie suspendue (21) du premier capteur gravimétrique.

2. Système selon la revendication 1, **caractérisé en ce que** la fréquence d'excitation correspond à la fréquence de résonance du résonateur ou celle d'un mode propre supérieur de cette fréquence de résonance.

3. Système selon la revendication 2, **caractérisé en ce que** l'élément (3) de liaison mécanique comporte une première extrémité solidaire de la première partie suspendue (11) sur un premier point correspondant à un anti-nœud de vibration de la première partie suspendue, lorsque celle-ci est excitée à sa fréquence de résonance (F_smr) ou à celle d'un mode propre supérieur.

4. Système selon la revendication 3, **caractérisé en ce que** l'élément (3) de liaison mécanique comporte une deuxième extrémité solidaire de la deuxième partie suspendue sur un deuxième point correspondant à un anti-nœud de vibration de la deuxième partie suspendue (21), lorsque celle-ci est excitée à la fréquence de vibration (F_nems).

5. Système selon l'une des revendications 1 à 4, **caractérisé en ce que** la première partie suspendue (11) est choisie parmi une poutre encastrée sur une seule partie fixe (20), une poutre encastrée entre deux parties fixes (20), et une plaque maintenue entre plusieurs parties fixes.

6. Système selon l'une des revendications 1 à 5, **caractérisé en ce que** la deuxième partie suspendue (21) est choisie parmi une poutre encastrée sur une seule partie fixe, une poutre encastrée entre deux parties fixes, et une plaque maintenue entre plusieurs parties fixes.

7. Système selon l'une des revendications 1 à 6, **caractérisé en ce que** lesdits moyens d'excitation (4) sont configurés pour faire vibrer la deuxième partie suspendue (21) à une fréquence de vibration proche de la fréquence de résonance de la première partie suspendue (11) ou celle d'un mode propre supérieur, à plus ou moins 30% de ladite fréquence de résonance ou de celle du mode propre supérieur.

8. Système selon l'une des revendications 1 à 7, **caractérisé en ce que** les moyens d'excitation (4) comportent au moins un élément piézocéramique.

9. Système selon l'une des revendications 1 à 8, **caractérisé en ce que** les moyens de mesure comportent une ou plusieurs jauges piézorésistives (PZ_2).

10. Système selon l'une des revendications 1 à 9, **caractérisé en ce que** le circuit fluidique intégré à la première partie suspendue du résonateur mécanique comporte un canal fluidique (12) principal et un piège hydrodynamique positionné dans son canal et destiné à venir piéger ladite particule.

11. Système selon l'une des revendications 1 à 10, **caractérisé en ce qu'**il comporte :

- Un deuxième capteur gravimétrique (2), comportant au moins une troisième partie fixe et une troisième partie suspendue apte à vibrer par rapport à la troisième partie fixe à une deuxième fréquence de vibration,
- La première partie suspendue (11) du résonateur mécanique (1) et la troisième partie suspendue du deuxième capteur gravimétrique (2) étant couplées mécaniquement entre elles via un deuxième élément (3) de liaison mécanique,
- Des deuxièmes moyens de mesure des variations de la deuxième fréquence de vibration de la troisième partie suspendue du deuxième capteur gravimétrique.

12. Système selon la revendication 11, **caractérisé en ce que** la troisième partie suspendue est choisie parmi une poutre encastrée sur une seule partie fixe, une poutre encastrée entre deux parties fixes, et une plaque maintenue entre plusieurs parties fixes.

13. Procédé de mesure d'au moins une propriété d'une particule, mis en œuvre à l'aide d'un système de mesure tel que défini dans l'une des revendications 1 à 12, **caractérisé en ce qu'**il comporte les étapes suivantes :

- Injection d'un fluide contenant ladite particule (P) dans le circuit fluidique du résonateur mécanique (1),
- Excitation de la première partie suspendue (11) du résonateur mécanique (1) à sa fréquence de résonance,
- Excitation de la deuxième partie suspendue (21) du premier capteur gravimétrique (2) à la fréquence de vibration,
- Mesure des variations de la fréquence de vibration de la deuxième partie suspendue (21) du premier capteur gravimétrique.

**14.** Procédé de mesure selon la revendication 13, **caractérisé en ce qu'**il comporte une étape de calibrage du système par injection dans le circuit fluidique d'un fluide contenant une ou plusieurs particules calibrées.

**Patentansprüche**

**1.** System zur Messung mindestens einer Eigenschaft eines Partikels (P), aufweisend:

- Einen mechanischen Resonator (1), umfassend mindestens einen ersten feststehenden Teil (10) und einen ersten hängenden Teil (11), der in der Lage ist, in Bezug auf den ersten feststehenden Teil zu schwingen, und einen in seinen hängenden Teil integrierten Fluidkreislauf, in dem ein das Partikel (P) enthaltende Fluid zirkulieren soll,
- Anregungsmittel (4), die dazu ausgelegt sind, den ersten hängenden Teil (11) mit einer Anregungsfrequenz (F_smr) schwingen zu lassen,
- **Dadurch gekennzeichnet, dass** es umfasst:

- Einen ersten gravimetrischen Sensor (2), aufweisend mindestens einen zweiten feststehenden Teil (20) und einen zweiten hängenden Teil (21), der in der Lage ist, in Bezug auf den zweiten feststehenden Teil (20) mit einer Schwingungsfrequenz (F_nems) zu schwingen,
- Wobei der erste hängende Teil (11) des mechanischen Resonators (1) und der zweite hängende Teil (21) des ersten gravimetrischen Sensors (2) untereinander über ein mechanisches Verbindungselement (3) mechanisch gekoppelt sind,
- Mittel zum Messen der Änderungen der Schwingungsfrequenz des zweiten hängenden Teils (21) des ersten gravimetrischen Sensors.

**2.** System nach Anspruch 1, **dadurch gekennzeichnet, dass** die Anregungsfrequenz der Resonanzfrequenz des Resonators oder derjenigen einer höheren Eigenmode dieser Resonanzfrequenz entspricht.

**3.** System nach Anspruch 2, **dadurch gekennzeichnet, dass** das mechanische Verbindungselement (3) ein erstes Ende umfasst, das mit dem ersten hängenden Teil (11) an einem ersten Punkt fest verbunden ist, der einem Schwingungsbauch des ersten hängenden Teils entspricht, wenn dieser mit seiner Resonanzfrequenz (F_smr) oder mit derjenigen einer höheren Eigenmode angeregt wird.

**4.** System nach Anspruch 3, **dadurch gekennzeichnet, dass** das mechanische Verbindungselement (3) ein zweites Ende umfasst, das mit dem zweiten hängenden Teil an einem zweiten Punkt fest verbunden ist, der einem Schwingungsbauch des zweiten hängenden Teils (21) entspricht, wenn dieser mit der Schwingungsfrequenz (F_nems) angeregt wird.

**5.** System nach einem der Ansprüche 1 bis 4, **dadurch gekennzeichnet, dass** der erste hängende Teil (11) aus einem in einen einzigen feststehenden Teil (20) eingespannten Träger, einem zwischen zwei feststehenden Teilen (20) eingespannten Träger und einer zwischen mehreren feststehenden Teilen gehaltenen Platte gewählt ist.

**6.** System nach einem der Ansprüche 1 bis 5, **dadurch gekennzeichnet, dass** der zweite hängende Teil (21) aus einem in einen einzigen feststehenden Teil eingespannten Träger, einem zwischen zwei feststehenden Teilen eingespannten Träger und einer zwischen mehreren feststehenden Teilen gehaltenen Platte gewählt ist.

**7.** System nach einem der Ansprüche 1 bis 6, **dadurch gekennzeichnet, dass** die Anregungsmittel (4) dazu ausgestaltet sind, den zweiten hängenden Teil (21) mit einer Schwingungsfrequenz nahe der Resonanzfrequenz des ersten hängenden Teils (11) oder derjenigen einer höheren Eigenmode, mit plus oder minus 30 % der Resonanzfrequenz oder derjenigen der höheren Eigenmode, schwingen zu lassen.

8. System nach einem der Ansprüche 1 bis 7, **dadurch gekennzeichnet, dass** die Anregungsmittel (4) mindestens ein piezokeramisches Element umfassen.

9. System nach einem der Ansprüche 1 bis 8, **dadurch gekennzeichnet, dass** die Mittel zum Messen einen oder mehrere piezoresistive Dehnungsmessstreifen (PZ_2) umfassen.

10. System nach einem der Ansprüche 1 bis 9, **dadurch gekennzeichnet, dass** der in den ersten hängenden Teil des mechanischen Resonators integrierte Fluidkreislauf einen Hauptfluidkanal (12) und eine hydrodynamische Falle, die in seinem Kanal angeordnet ist und zum Fangen des Partikels bestimmt ist, umfasst.

11. System nach einem der Ansprüche 1 bis 10, **dadurch gekennzeichnet, dass** es umfasst:

- Einen zweiten gravimetrischen Sensor (2), umfassend mindestens einen dritten feststehenden Teil und einen dritten hängenden Teil, der in der Lage ist, in Bezug auf den dritten feststehenden Teil mit einer zweiten Schwingungsfrequenz zu schwingen,
- Wobei der erste hängende Teil (11) des mechanischen Resonators (1) und der dritte hängende Teil des zweiten gravimetrischen Sensors (2) untereinander über ein zweites mechanisches Verbindungselement (3) mechanisch gekoppelt sind,
- Zweite Mittel zum Messen der Änderungen der zweiten Schwingungsfrequenz des dritten hängenden Teils des zweiten gravimetrischen Sensors.

12. System nach Anspruch 11, **dadurch gekennzeichnet, dass** der dritte hängende Teil aus einem in einen einzigen feststehenden Teil eingespannten Träger, einem zwischen zwei feststehenden Teilen eingespannten Träger und einer zwischen mehreren feststehenden Teilen gehaltenen Platte ausgewählt ist.

13. Verfahren zur Messung mindestens einer Eigenschaft eines Partikels, das mit einem System zur Messung wie in einem der Ansprüche 1 bis 12 definiert durchgeführt wird, **dadurch gekennzeichnet, dass** es die folgenden Schritte umfasst:

- Injizieren eines das Partikel (P) enthaltenden Fluids in den Fluidkreislauf des mechanischen Resonators (1),
- Anregen des ersten hängenden Teils (11) des mechanischen Resonators (1) mit seiner Resonanzfrequenz,
- Anregen des zweiten hängenden Teils (21) des ersten gravimetrischen Sensors (2) mit der Schwingungsfrequenz,
- Messen der Änderungen der Schwingungsfrequenz des zweiten hängenden Teils (21) des ersten gravimetrischen Sensors.

14. Verfahren zur Messung nach Anspruch 13, **dadurch gekennzeichnet, dass** es einen Schritt des Kalibrierens des Systems durch Injizieren eines einen oder mehrere kalibrierte Partikel enthaltenden Fluids in den Fluidkreislauf umfasst.

## Claims

1. System for measuring at least one property of a particle (P), comprising:

- A mechanical resonator (1) comprising at least a first fixed part (10) and a first suspended part (11) able to vibrate with respect to the first fixed part, and a fluidic circuit integrated into its suspended part, in which a fluid containing said particle (P) is made to circulate,
- Excitation means (4) configured to make the first suspended part (11) vibrate at an excitation frequency (F_smr),
- **Characterized in that** it comprises:

- A first gravimetric sensor (2) comprising at least a second fixed part (20) and a second suspended part (21) able to vibrate with respect to the second fixed part (20) at a vibration frequency (F_nems),
- The first suspended part (11) of the mechanical resonator (1) and the second suspended part (21) of the first gravimetric sensor (2) being coupled mechanically to one another via a mechanical linking element (3),
- Measuring means for measuring variations in the vibration frequency of the second suspended part (21) of the first gravimetric sensor.

2. System according to Claim 1, **characterized in that** the excitation frequency corresponds to the resonant frequency of the resonator or that of a higher natural mode of this resonant frequency.

3. System according to Claim 2, **characterized in that** the mechanical linking element (3) comprises a first end integral with the first suspended part (11) on a first point corresponding to a vibration anti-node of the first suspended part, when the latter is excited at its resonant frequency (F_smr) or at that of a higher natural mode.

4. System according to Claim 3, **characterized in that** the mechanical linking element (3) comprises a second end integral with the second suspended part on a second point corresponding to a vibration anti-node of the second suspended part (21), when the latter is excited at the vibration frequency (F_nems).

5. System according to one of Claims 1 to 4, **characterized in that** the first suspended part (11) is chosen from among a beam clamped to a single fixed part (20), a beam clamped between two fixed parts (20), and a plate held between multiple fixed parts.

6. System according to one of Claims 1 to 5, **characterized in that** the second suspended part (21) is chosen from among a beam clamped to a single fixed part, a beam clamped between two fixed parts, and a plate held between multiple fixed parts.

7. System according to one of Claims 1 to 6, **characterized in that** said excitation means (4) are configured to make the second suspended part (21) vibrate at a vibration frequency close to the resonant frequency of the first suspended part (11) or that of a higher natural mode, at plus or minus 30% of said resonant frequency or that of the higher natural mode.

8. System according to one of Claims 1 to 7, **characterized in that** the excitation means (4) comprise at least one piezoceramic element.

9. System according to one of Claims 1 to 8, **characterized in that** the measuring means comprise one or more piezoresistive gauges (PZ_2).

10. System according to one of Claims 1 to 9, **characterized in that** the fluidic circuit integrated into the first suspended part of the mechanical resonator comprises a main fluidic channel (12) and a hydrodynamic trap positioned in its channel and intended to trap said particle.

11. System according to one of Claims 1 to 10, **characterized in that** it comprises:

   - A second gravimetric sensor (2), comprising at least a third fixed part and a third suspended part able to vibrate with respect to the third fixed part at a second vibration frequency,
   - The first suspended part (11) of the mechanical resonator (1) and the third suspended part of the second gravimetric sensor (2) being coupled mechanically to one another via a second mechanical linking element (3),
   - Second measuring means for measuring variations in the second vibration frequency of the third suspended part of the second gravimetric sensor.

12. System according to Claim 11, **characterized in that** the third suspended part is chosen from among a beam clamped to a single fixed part, a beam clamped between two fixed parts, and a plate held between multiple fixed parts.

13. Method for measuring at least one property of a particle, implemented using a measuring system as defined in one of Claims 1 to 12, **characterized in that** it comprises the following steps:

   - Injecting a fluid containing said particle (P) into the fluidic circuit of the mechanical resonator (1),
   - Exciting the first suspended part (11) of the mechanical resonator (1) at its resonant frequency,
   - Exciting the second suspended part (21) of the first gravimetric sensor (2) at the vibration frequency,
   - Measuring variations in the vibration frequency of the second suspended part (21) of the first gravimetric sensor.

14. Measuring method according to Claim 13, **characterized in that** it comprises a step of calibrating the system by injecting a fluid containing one or more calibrated particles into the fluidic circuit.

**Fig. 1A**

**Fig. 1B**

**Fig. 2**

4

M_1
M_2
M_3

A_1    A_2    A_3

**Fig. 3A**

20

2

4

F_nems

21

ΔF_nems

**Fig. 3B**

20

2

21

**Fig. 4A**

**Fig. 4B**

**Fig. 5**

*Fig. 6*

**Fig. 7**

Fig. 8

10

12

11

2

21

21

2

3

PZ_2

PZ_2

20

3

20

1

**Fig. 9**

Fig. 10

Fig. 11

*Fig. 12*

E1

SOI_inf

12

SOI_sup

E2

SOI_inf

12    11    21

E3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021046477 A1
- US 8899102 B1
- US 8631685 B2
- US 8312763 B2
- US 8899102 B2